(19) Europäisches Patentamt
European Patent Office
Office européen des brevets

(11) **EP 2 315 072 A1**

(12) **EUROPEAN PATENT APPLICATION**
published in accordance with Art. 153(4) EPC

(43) Date of publication:
**27.04.2011 Bulletin 2011/17**

(21) Application number: **09800468.2**

(22) Date of filing: **24.07.2009**

(51) Int Cl.:
**G02F 1/167** (2006.01)　**G02F 1/17** (2006.01)
**G09F 9/30** (2006.01)　**G09F 9/37** (2006.01)

(86) International application number:
**PCT/JP2009/063289**

(87) International publication number:
**WO 2010/010954 (28.01.2010 Gazette 2010/04)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **24.07.2008 JP 2008191388**

(71) Applicant: **Bridgestone Corporation
Tokyo 104-8340 (JP)**

(72) Inventors:
 • **TANAKA, Kanji
　Kodaira-shi
　Tokyo 187-8531 (JP)**

 • **SAKURAI, Ryo
　Kodaira-shi
　Tokyo 187-8531 (JP)**
 • **OHNO, Shingo
　Kodaira-shi
　Tokyo 187-8531 (JP)**
 • **NISHIDA, Mitsuhiro
　Kodaira-shi
　Tokyo 187-8531 (JP)**
 • **NISHII, Masayuki
　Kodaira-shi
　Tokyo 187-8531 (JP)**

(74) Representative: **Lloyd, Robin
　Marks & Clerk LLP
　90 Long Acre
　London WC2E 9RA (GB)**

(54) **DOT MATRIX TYPE INFORMATION DISPLAY PANEL**

(57)　A plurality of cells are formed by a polygonal cell having even number of sides being at least six sides, and a plurality of cells being constructed by a polygonal shape as a unit are arranged in a display region regularly, so as to construct the dot matrix type information display panel. Therefore, it is possible to provide a dot matrix type information display panel: in which lines in a longitudinal and lateral directions are not so emphasized when an image information such as characters and so on which are displayed based on a line; in which a dot does not look in such a manner that a quadrangular shape collapses and an interference fringe (moire) is not generated as in the case of the honeycomb-shaped partition walls; and in which an image such as sharp and natural characters and so on which are displayed based on a line can be displayed.

*FIG. 8*

12

**Description**

TECHNICAL FIELD

The present invention relates to a dot matrix type information display panel having a quadrangular dot matrix: in which a plurality of cells each divided by partition walls between two substrates, at least one substrate being transparent; in which display media constituted by particles are sealed in the cell; and in which the display media are electrically driven, by utilizing paired electrodes formed by arranging pixel electrodes having a quadrangular shape to the substrates, so as to display information such as an image.

RELATED ART

Generally, there is known a dot matrix type information display panel having a quadrangular dot matrix: in which a plurality of cells each divided by partition walls between two substrates, at least one substrate being transparent; in which display media constituted by particles are sealed in the cell; and in which the display media are electrically driven, by utilizing paired electrodes formed by arranging pixel electrodes having a quadrangular shape to the substrates, so as to display information such as an image (for example, refer to Japanese Patent Laid-Open Publication No. 2001-215537). In the information display panel mentioned above, as a shape of the cell divided by the partition walls, a shape such as a grid-shape and a honeycomb-shape is proposed, and, as a an electrode shape forming a pixel, a quadrangular dot is proposed.

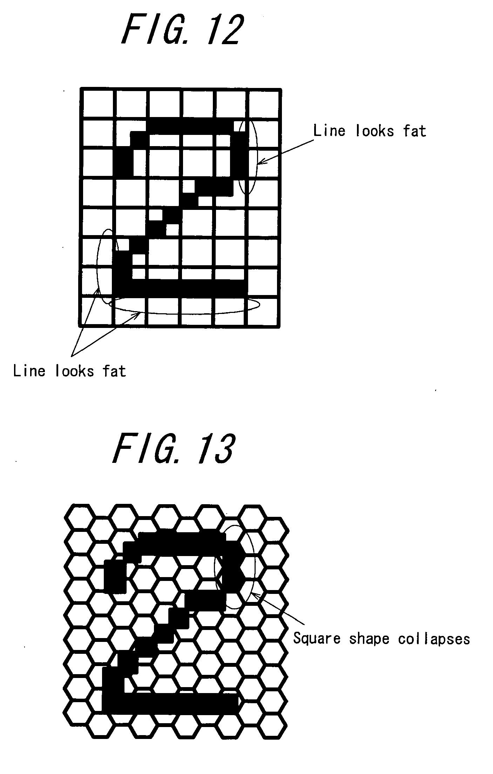

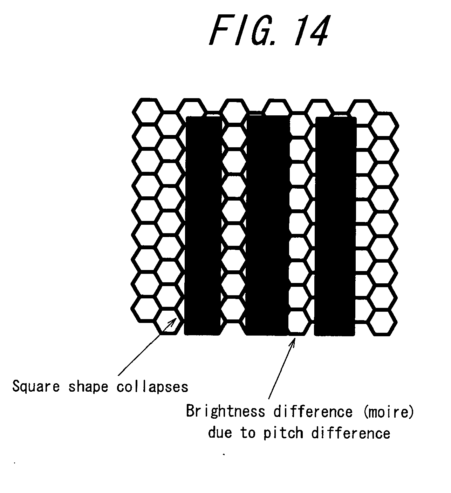

Fig. 12 is a schematic view showing one embodiment in which the cell is formed by using grid-shaped partition walls in the known information display panel mentioned above. Moreover, Fig. 13 and Fig. 14 are schematic views respectively showing another embodiment in which the cell is formed by using honeycomb-shaped partition walls in the known information display panel mentioned above. In respective embodiments, only the partition walls are shown for the sake of showing understandable construction of the partition walls, and the substrates and the electrodes, which are necessary for constructing the information display panel, are not shown. Further, in the embodiments shown in Fig. 12 and Fig. 13, a state, such that a numeral "2" is to be displayed, is shown, and, in the embodiment shown in Fig. 14, a state, such that three lines are to be displayed along a longitudinal direction equidistantly, is shown.

DISCLOSURE OF THE INVENTION

TASKS TO BE SOLVED BY THE INVENTION

Among the known information display panel mentioned above, in the embodiment shown in Fig. 12 in which the cell is formed by the grid-shaped partition walls, the partition walls in the longitudinal and lateral directions are rough and are conspicuous. Therefore, a square dot is emphasized, and an expression becomes remarkable to excess. Moreover, portions at which a character and the partition wall are identical are liable to be continued. Since a line displayed by viewing the particles and a line displayed by viewing the partition wall are overlapped, the continued portion mentioned above looks fat. On the other hand, in the embodiments shown in Fig. 13 and Fig. 14 in which the cell is formed by the honeycomb-shaped partition walls, since the partition walls constructing the cell does not have a right angle portion as compared with the quadrangular dot, a quadrangular shape in a dot display is liable to collapse, and thus a thin dot and a thin line are difficult to display. Moreover, as shown in Fig. 14, in the case such that three lines are to be displayed along a longitudinal direction equidistantly, since the honeycomb-shaped partition wall and the width of the electrode are not identical, an interference fringe (moire) is sometimes generated.

An object of the present invention is to eliminate the drawbacks mentioned above and to provide a dot matrix type information display panel: in which lines in a longitudinal and lateral directions are not so emphasized when an image information such as characters and so on which are displayed based on a line; in which a dot does not look in such a manner that a quadrangular shape collapses and an interference fringe (moire) is not generated as in the case of the honeycomb-shaped partition walls; and in which an image such as sharp and natural characters and so on which are displayed based on a line can be displayed.

MEANS FOR SOLVING THE TASKS

According to the invention, a dot matrix type information display panel having a quadrangular dot matrix: in which a plurality of cells each divided by partition walls between two substrates, at least one substrate being transparent; in which display media constituted by particles are sealed in the cell; and in which the display media are electrically driven, by utilizing paired electrodes formed by arranging pixel electrodes having a quadrangular shape to the substrates, so as to display information such as an image, is characterized in that a plurality of cells are formed by a polygonal cell having even number of sides being at least six sides, and a plurality of cells being constructed by a polygonal shape as a unit are arranged in a display region regularly.

As a preferred embodiments of the dot matrix type information display panel according to the invention, there are cases: such that all of partition wall portions of the polygonal cells are connected at a right angle; such that a shape of the polygonal cell is one of L-shape, stair-shape and convex-shape; such that a size of the paired electrodes formed by arranging pixel electrodes having a quadrangular shape to the substrates is a quadrangle having 100 μm over x 100 μm over; such that a width of the partition wall is in a range of 5 μm - 50 μm; and such that the partition wall is formed by a photolithography method.

EFFECTS OF THE INVENTION

According to the invention, since a plurality of cells are formed by a polygonal cell having even number of sides being at least six sides, and a plurality of cells being constructed by a polygonal shape as a unit are arranged in a display region regularly, it is possible to obtain information display panel: in which lines in a longitudinal and lateral directions are not so emphasized when an image information such as characters and so on which are displayed based on a line; in which a dot does not look in such a manner that a quadrangular shape collapses and an interference fringe (moire) is not generated as in the case of the honeycomb-shaped partition walls; and in which an image such as sharp and natural characters and so on which are displayed based on a line can be displayed.

In this case, if an area of the partition walls in a display region, an opening ratio decreases and a contrast decreases correspondingly. However, in the present invention, since an area of the partition walls is about 125 % as compared with a case such that a hexagonal cell is arranged in a honeycomb manner, there occurs no remarkable decrease. In addition, since cross points of the partition walls evenly exist, a strength with respect to a peeling can be increased.

BRIEF DESCRIPTION OF THE DRAWINGS

[Fig. 1] Figs. 1a and 1b are schematic views respectively showing one embodiment of a panel construction of a dot matrix type information display panel according to the invention.
[Fig. 2] Figs. 2a and 2b are schematic views respectively illustrating another embodiment of a panel construction of a dot matrix type information display panel according to the invention.
[Fig. 3] Figs 3a and 3b are schematic views respectively depicting still another embodiment of a panel construction of a dot matrix type information display panel according to the invention.
[Fig. 4] Figs. 4a - 4g are schematic views respectively explaining one embodiment of a polygonal cell in a dot matrix type information display panel according to the invention.
[Fig. 5] Figs. 5a - 5g are schematic views respectively explaining another embodiment of a polygonal cell in a dot matrix type information display panel according to the invention.
[Fig. 6] Figs. 6a - 6g are schematic views respectively explaining still another embodiment of a polygonal cell in a dot matrix type information display panel according to the invention.
[Fig. 7] Figs. 7a - 7g are schematic views respectively explaining still another embodiment of a polygonal cell in a dot matrix type information display panel according to the invention.
[Fig. 8] Fig. 8 is a schematic view showing a case in which a stair-shaped polygonal cell is used in a dot matrix type information display panel according to the invention.
[Fig. 9] Fig. 9 is a schematic view showing a case in which a stair-shaped polygonal cell is used in a dot matrix type information display panel according to the invention.
[Fig. 10] Figs. 10a and 10b are schematic views respectively explaining one embodiment of a substrate in an example of a dot matrix type information display panel according to the invention.
[Fig. 11] Figs. 11a - 11l are schematic views respectively explaining a polygonal cell formed by partition walls in an example of a dot matrix type information display panel according to the invention.
[Fig. 12] Fig. 12 is a schematic view showing a case in which a cell is formed by a grid-shaped partition walls in a known information display panel.
[Fig. 13] Fig. 13 is a schematic view illustrating a case in which a cell is formed by a honeycomb-shaped partition walls in a known information display panel.
[Fig. 14] Fig. 14 is a schematic view illustrating a case in which a cell is formed by a honeycomb-shaped partition walls in a known information display panel.

EMBODIMENT FOR CARRYING OUT THE INVENTION

At first, as one example of a display panel used in a dot matrix type information display panel according to the invention, the display panel using the display media constituted by the particles including a charged particle will be explained. In the display panel used in the information display panel according to the invention, an electrostatic field is applied to the display media constituted by the particles including a charged particle having an optical reflectance, which are sealed between opposed two substrates. Along a direction of the applied electrostatic field, charged display media are attracted by means of a force due to electrostatic field or Coulomb's force, and, the display media are moved reciprocally by varying a direction of the electrostatic field due to a potential switching, so that information such as an image can be displayed. Therefore, it is necessary to design the information display panel in such a manner that the display media can move evenly and maintain stability during a reciprocal operation or during a display information reserving state. Here, as to forces applied to the particles constituting the display media, there are an attraction force between the particles due to Coulomb' force, an imaging force with respect to the electrode or the substrate, an intermolecular force, a liquid bonding force and a gravity.

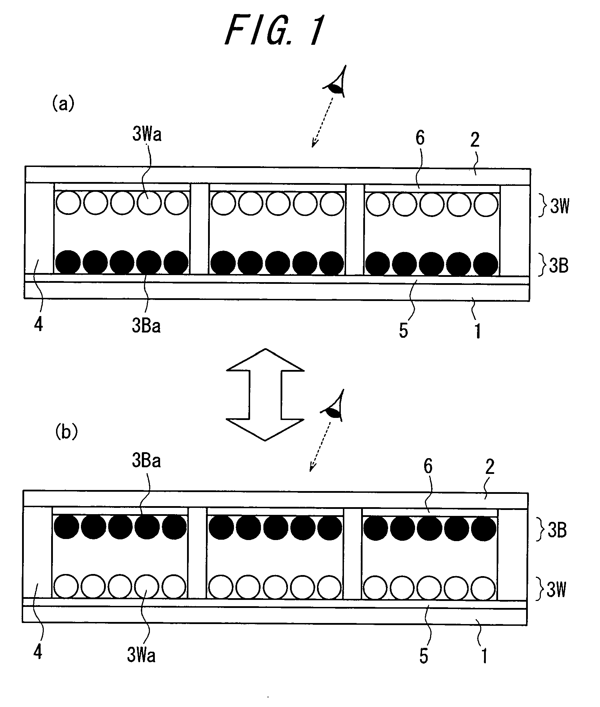

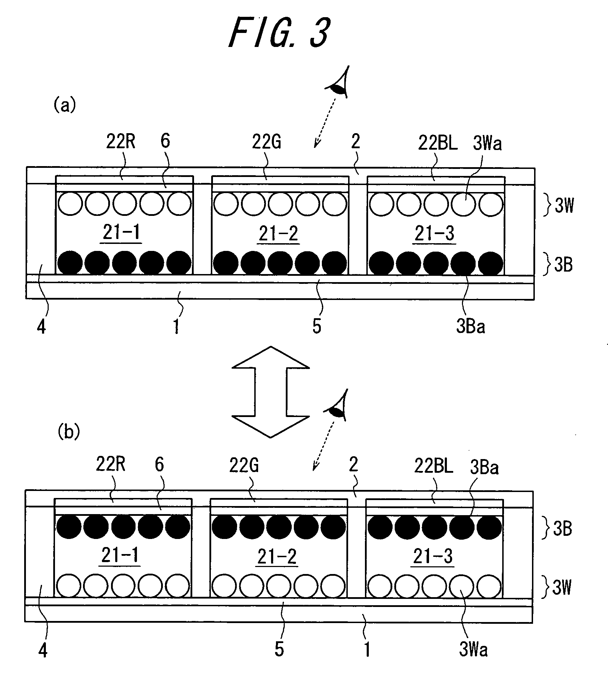

Examples of the display panel used in the dot matrix type information display panel according to the invention will be explained with reference to Figs.1a and 1b - Figs. 3a and 3b.

In the examples shown in Figs. 1a and 1b, at least two or more groups of display media having different optical reflectance and different charge characteristics (here, white color display media 3W constituted by the particles including a negatively charged white particle 3Wa and black color display media 3B constituted by the particles including a positively charged black particle 3Wb are shown) are moved in a perpendicular direction with respect to substrates 1 and 2, in respective cells formed by the partition walls 4, in accordance with an electric field generated by applying a voltage between pixel electrode pairs formed in such a manner that the electrode 5 (line electrode) arranged to the substrate 1 and the electrode 6 (line electrode) arranged to the substrate 2 are intersected oppositely and orthogonally. In this embodiment, the pixel electrode pairs (1 dot) and the cell correspond one by one. Then, a white color display (white color 3 dots) is performed by viewing the white color display media 3W to an observer as shown in Fig. 1a, or a black color display (black color 3 dots) is performed by viewing the black color display media 3B to the observer as shown in Fig. 1b. It should be noted that, in Figs. 1a and 1b, the partition walls arranged at the near side are omitted.

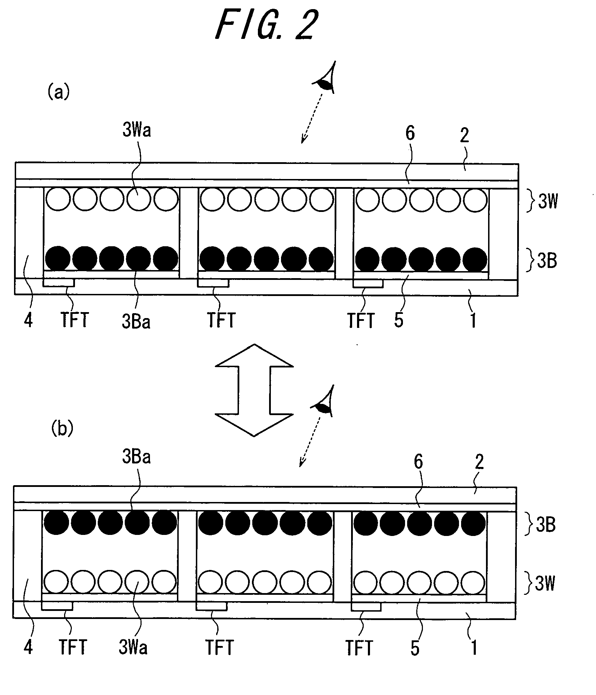

In the examples shown in Figs. 2a and 2b, at least two or more groups of display media having different optical reflectance and different charge characteristics (here, white color display media 3W constituted by the particles including a negatively charged white particle 3Wa and black color display media 3B constituted by the particles including a positively charged black particle 3Wb are shown) are moved in a perpendicular direction with respect to substrates 1 and 2, in respective cells formed by the partition walls 4, in accordance with an electric field generated by applying a voltage between the electrode 5 (pixel electrode with TFT) arranged to the substrate 1 and the electrode 6 (common electrode) arranged to the substrate 2. In this embodiment, the pixel electrode pairs (1 dot) and the cell correspond one by one. Then, a white color display (white color 3 dots) is performed by viewing the white color display media 3W to an observer as shown in Fig. 2a, or a black color display (black color 3 dots) is performed by viewing the black color display media 3B to the observer as shown in Fig. 2b. It should be noted that, in Figs. 2a and 2b, the partition walls arranged at the near side are omitted. In these embodiments mentioned above, an explanation is made to a display panel of a charged particle moving in a gas type in which a gas is filled in a cell space. However, a display panel of a charged particle moving in a liquid type (electrophoresis type), in which a liquid is used instead of a gas, may be used.

In the examples shown in Figs. 3a and 3b, a color display utilizing a display unit (1 dot) constituted by three cells (pixels) corresponding respectively to the pixel electrode pairs is explained. In the examples shown in Figs. 3a and 3b: the white color display media 3W and the black color display media 3B are filled in all cells 21-1 to 21-3 as the display media; a red color filter 22R is arranged to the first cell 21-1 at the observer's side; a green filter 22G is arranged to the second cell 21-2 at the observer's side; and a blue color filter 22B is arranged to the third cell 21-3 at the observer's side, so that the display unit (1 dot) is constructed by three cells (pixels) having the first cell 21-1, the second cell 21-2 and the third cell 21-3. In this embodiment, as shown in Fig. 3a, a white color display is performed for the observer by arranging the white color display media 3W to all the first cell 21-1 to the third cell 21-3 at the observer's side, or, as shown in Fig. 3b, a black color display is performed for the observer by arranging the black color display media 3B to all the first cell 21-1 to the third cell 21-3 at the observer's side. Moreover, in Figs. 3a and 3b, the partition walls arranged at the near side are omitted. A multicolor display can be performed by varying a movement of display media in respective cells.

In the examples shown in Figs. 1a, 1b - Figs. 3a, 3b, in order to explain an concept of the display panel in the information display panel, an example, in which 1 pixel and 1 cell correspond one by one, is explained. On the assumption of the construction of these display panels, a feature of the information display panel according the invention is that, in the dot matrix type display panel in which the quadrangular shape constituted by the paired electrode, wherein the electrode arranged to one substrate and the electrode arranged to the other substrate are overlapped, is the unit pixel (1 dot): a plurality of cells are formed by a polygonal cell having even number of sides being at least six sides; all of the partition wall portions of the polygonal cells are connected at a right angle; and a plurality of the unit cells having same shape are combined so as to construct a panel.

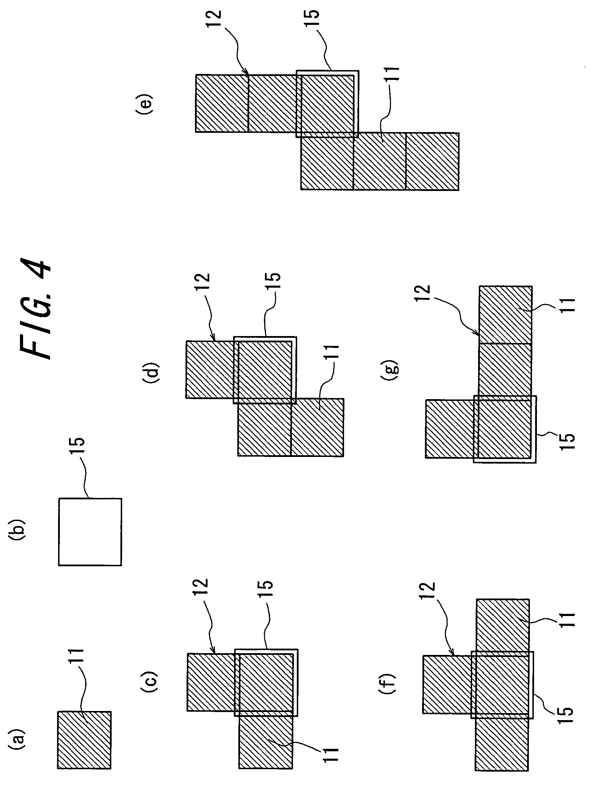

Figs. 4a - 4g are schematic views respectively explaining one embodiment of a polygonal cell in a dot matrix type information display panel according to the invention. In this embodiment, an example for arranging the polygonal cell and a quadrangular pixel 15 is shown in the case such that a size of a quadrangular shape 11 shown in Fig. 4a, which is a basic unit of the polygonal cell, is same as a size of a pixel 15 constituted by a quadrangular shape shown in Fig. 4b. In the embodiment shown in Fig. 4c, a polygonal cell 12 having a L-shape constituted by three unit quadrangular shapes 11 is shown. In the embodiment shown in Fig. 4d, a polygonal cell 12 having a stair-shape constituted by four unit quadrangular shapes 11 is shown. In the embodiment shown in Fig. 4e, a polygonal cell 12 having a stair-shape constituted by six unit quadrangular shapes 11 is shown. In the embodiment shown in Fig. 4f, a polygonal cell 12 having a convex-shape constituted by four unit quadrangular shapes 11 is shown. In the embodiment shown in Fig. 4g, a polygonal shape 12 having a L-shape constituted by four unit quadrangular shapes 11 is shown.

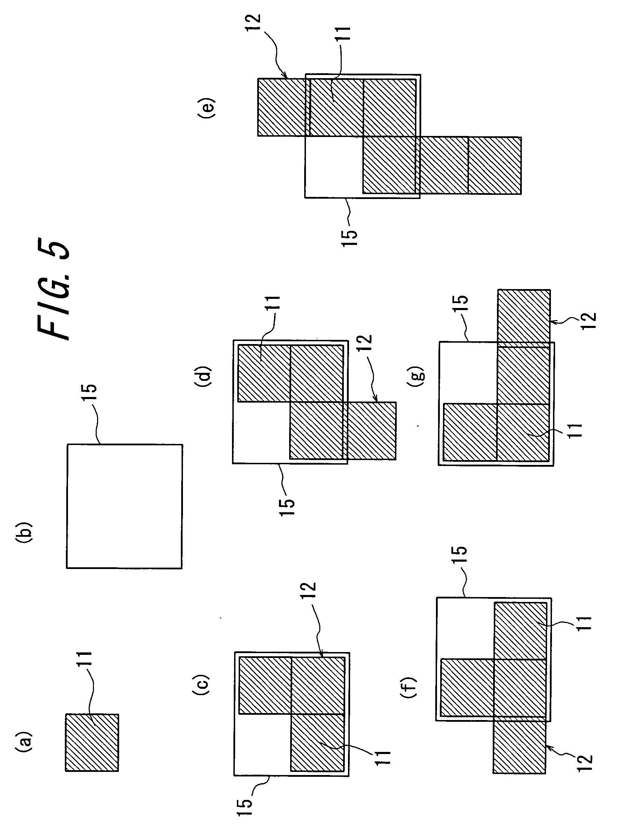

Figs. 5a - 5g are schematic views respectively explaining another embodiment of a polygonal cell in a dot matrix type information display panel according to the invention. In this embodiment, an example for arranging the polygonal cell and a quadrangular pixel 15 is shown in the case such that a size of a quadrangular shape 11 shown in Fig. 5a, which is a basic unit of the polygonal cell, is one fourth as a size of a pixel 15 constituted by a quadrangular shape shown in Fig. 5b. In the embodiment shown in Fig. 5c, a polygonal cell 12 having a L-shape constituted by three unit quadrangular shapes 11 is shown. In the embodiment shown in Fig. 5d, a polygonal cell 12 having a stair-shape constituted by four unit quadrangular shapes 11 is shown. In the embodiment shown in Fig. 5e, a polygonal cell 12 having a stair-shape constituted by six unit quadrangular shapes 11 is shown. In the embodiment shown in Fig. 5f, a polygonal cell 12 having a convex-shape constituted by four unit quadrangular shapes 11 is shown. In the embodiment shown in Fig. 5g, a polygonal cell 12 having a L-shape constituted by four unit quadrangular shapes 11 is shown.

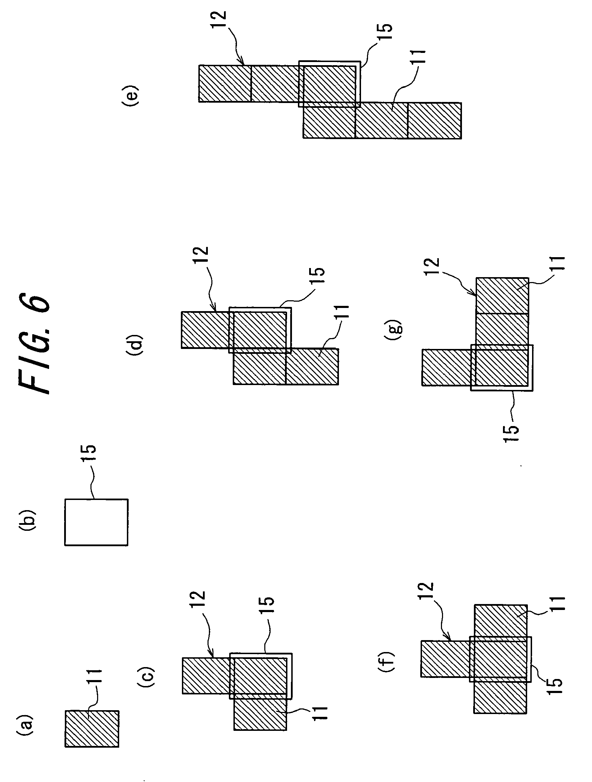

Figs. 6a - 6g are schematic views respectively explaining still another embodiment of a polygonal cell in a dot matrix type information display panel according to the invention. In this embodiment, an example for arranging a unit quadrangular shape 11 and a quadrangular pixel 15 is shown in the case such that a size of a unit quadrangular shape 11 shown in Fig. 6a with a slightly long side in a longitudinal direction is same as a size of a pixel 15 constituted by a quadrangular shape shown in Fig. 6b with a slightly long side in a longitudinal direction. In the embodiment shown in Fig. 6c, a polygonal cell 12 having a L-shape constituted by three unit quadrangular shapes 11. In the embodiment shown in Fig. 6d, a polygonal cell 12 having a stair-shape constituted by four unit quadrangular shapes 11 is shown. In the embodiment shown in Fig. 6e, a polygonal cell 12 having a stair-shape constituted by six unit quadrangular shapes 11 is shown. In the embodiment shown in Fig. 6f, a polygonal cell 12 having a convex-shape constituted by four unit quadrangular shapes 11 is shown. In the embodiment shown in Fig. 6g, a polygonal cell 12 having a L-shape constituted by four unit quadrangular shapes 11 is shown.

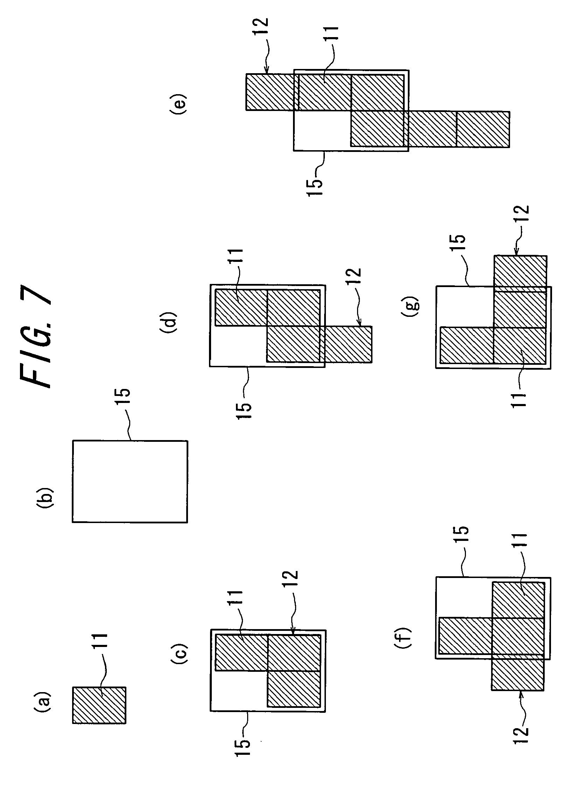

Figs. 7a - 7g are schematic views respectively explaining still another embodiment of a polygonal cell in a dot matrix type information display panel according to the invention. In this embodiment, an example for arranging a polygonal cell and a quadrangular pixel 15 is shown in the case such that a size of a unit quadrangular shape 11 shown in Fig. 7a with a slightly long side in a longitudinal direction is one fourth as a size of a pixel 15 constituted by a quadrangular shape shown in Fig. 7b with a slightly long side in a longitudinal direction. In the embodiment shown in Fig. 7c, a polygonal cell 12 having a L-shape constituted by three unit quadrangular shapes 11 is shown. In the embodiment shown in Fig. 7d, a polygonal cell 12 having a stair-shape constituted by four unit quadrangular shapes 11 is shown. In the embodiment shown in Fig. 7e, a polygonal cell 12 having a stair-shape constituted by six unit quadrangular shapes 11 is shown. In the embodiment shown in Fig. 7f, a polygonal cell 12 having a convex-shape constituted by four unit quadrangular shapes 11 is shown. In the embodiment shown in Fig. 7g, a polygonal cell 12 having a L-shape constituted by four unit quadrangular shapes 11 is shown.

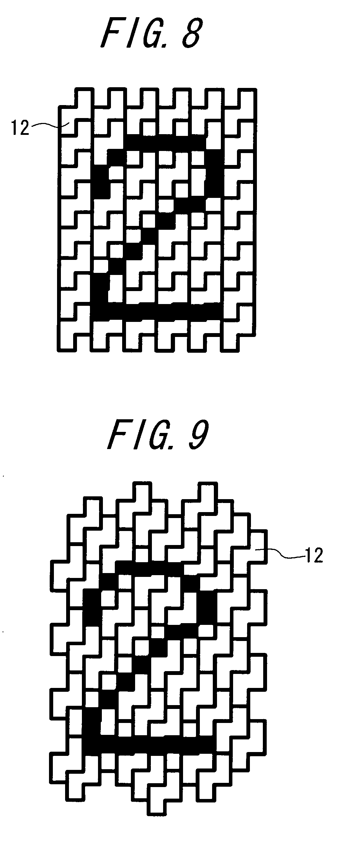

Fig. 8 and Fig. 9 are schematic views respectively showing a case in which a stair-shaped polygonal cell is used in a dot matrix type information display panel according to the invention. In both embodiments shown in Fig. 8 and Fig. 9, use is made of the same stair-shaped polygonal cell 12. A different point is as follows. That is, in the embodiment shown in Fig. 8, a plurality of stair-shaped polygonal cells 12 are arranged in a longitudinal direction. On the other hand, in the embodiment shown in Fig. 9, a plurality of stair-shaped polygonal cells 12 are arranged not in the longitudinal and lateral directions and are arranged in an oblique direction. In both embodiments, in order to show a construction of the partition walls clearly, only the partition walls are shown, and the substrate, the electrode and so on which are necessary to construct the information display panel are not illustrated.

If a display state of the dot matrix type information display panel according to the invention shown in Figs. 8 and 9 is compared with a display state of the known information display panel shown in Figs. 12 - 14, the followings are understood. At first, in the dot matrix type information display panels according to the invention shown in Figs. 8 and 9, the lines in the longitudinal and lateral directions are not so emphasized. Moreover, a dot does not look in such a manner that a quadrangular shape collapses and an interference fringe (moire) is not generated as in the case shown in Figs. 13 and 14 in which the partition walls has a honeycomb shape. Further, since all peripheral portions of the characters do not edge with the partition walls, sharp and natural characters can be displayed. Furthermore, if an area of the partition walls is increased, an opening rate is decreased and a contrast is deteriorated. However, since an area of the partition walls is about 125 % as compared with a case such that a hexagonal cell is arranged in a honeycomb manner, there occurs no remarkable decrease on a contrast. In addition, since cross points of the partition walls evenly exist, a strength with respect to a peeling can be increased, in the case such that a top of the partition wall is connected to the panel substrate.

In the dot matrix type information display panel according to the invention, since the partition walls 4 are liable to be highly visible, a width of the unit quadrangular shape 11 formed by the paired opposed electrodes, i.e., a width of the electrodes 5, 6 is set to not less than 100 $\mu$m preferably, not less than 200 $\mu$m more preferably. Moreover, if an area of the polygonal cell 12 is large in excess, the particles constituting the display media are liable to be unevenly distributed. Therefore, the constructions shown in Figs. 4, 5, 6 and 7 can be preferably used in relation to the pixels.

Hereinafter, respective members constituting the dot matrix type information display panel according to the invention will be explained.

As the substrate, at least one of the substrates is the transparent substrate 2 through which a color of the display media can be observed from outside of the panel, and it is preferred to use a material having a high transmission factor of visible light and an excellent heat resistance. The other substrate 1 may be transparent or may be opaque. Examples of the substrate material include polymer sheets such as polyethylene terephthalate, polyethylene naphthalate, polyether sulfone, polyethylene, polycarbonate, polyimide or acryl and metal sheets having flexibility and inorganic sheets such as glass, quartz or so having no flexibility. The thickness of the substrate is preferably 2 to 2000 $\mu$m, more preferably 5 to 1000 $\mu$m. When the thickness is too thin, it becomes difficult to maintain strength and distance uniformity between the substrates, and when the thickness is thicker than 5000 $\mu$m, there is a drawback as a thin-type information display panel.

As a material of the electrode, use is made of metals such as aluminum, silver, nickel, copper, gold, or, conductive metal oxides such as indium tin oxide (ITO), indium zinc oxide (IZO), indium oxide, conductive tin oxide, antimony tin oxide (ATO), conductive zinc oxide and so on, or, conductive polymers such as polyaniline, polypyrrole, polythiophene and so on, and they are used by being suitably selected. As an electrode forming method, use is made of a method in which the materials mentioned above are made to a thin film by means of sputtering method, vacuum vapor deposition method, CVD (chemical vapor deposition) method, coating method and so on, or, a method of laminating a metal foil (for example, rolled copper foil), or, a method in which conductive materials and solvents are mixed with synthetic resin binder and the mixture is sprayed to perform pattering. A transparency is necessary for the electrode arranged to the substrate 2 at an observation side, but it is not necessary for the electrode arranged to the substrate 1 at a rear side. In both cases, the materials mentioned above, which are transparent and have a pattern formation capability, can be suitably used. Additionally, the thickness of the electrode may be suitable unless the electro-conductivity is absent or any hindrance exists in optical transparency, and it is preferable to be 0.01 - 10 $\mu$m, more preferable to be 0.05 - 5 $\mu$m. The material and the thickness of the electrode arranged to the rear substrate 1 are the same as those of the electrode arranged to the substrate at the display side, but transparency is not necessary.

As the partition wall 4, it is necessary to construct a shape of the partition wall in such a manner that the unit cell 12 mentioned above can be formed by the partition wall. Here, as the formation method of the partition wall, use may be made of a die transfer method, a screen-printing method, a sandblast method, a photolithography method and an additive method. These methods may be preferably used for the information display panel installed in the information display device. Among them, it is preferred to use a photolithography method using a resist film or a die transfer method.

Then, the particles having optical reflectance and charge characteristics and constituting the display media used in the information display panel according to the invention will be explained. The particles are used as the display media as they are, or, used as the display media after they are mixed with the other particles. The particle may be composed of resins as a main ingredient, and can include according to need charge control agents, coloring agent, inorganic additives and so on, as is the same as the known one. Hereinafter, typical examples of resin, charge control agent, coloring agent, additive and so on will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom) , the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye having various colors as will be described below are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent.

The particles having a desired color can be produced by mixing the coloring agents mentioned above.

Moreover, as the average particle diameter d (0.5) of the particles for the display media (hereinafter, called sometimes as particles), it is preferred to set d (0.5) to 1 - 20 $\mu$m and to use even particles. If the average particle diameter d (0.5) exceeds this range, the image clearness sometimes deteriorated, and, if the average particle diameter is smaller than this range, an agglutination force between the particles becomes larger and the movement of the particles is prevented.

Further, it is preferred that particle diameter distribution Span of the particles, which is defined by the following formula, is less than 5 preferably less than 3:

$$\mathrm{Span} = (d(0.9) - d(0.1))/d(0.5) \ ;$$

amount of the particles having the particle diameter smaller than this value is 90%) .

If the particle diameter distribution Span of the particles is set to not more than 5, the particle diameter becomes even and it is possible to perform an even particle movement.

Furthermore, in the case of using a plurality of display media, it is preferred to set a ratio of d (0.5) of the particles having smallest diameter with respect to d (0.5) of the particles having largest diameter to not more than 10 preferably not more than 10. The particles having different charge characteristics with each other are moved reversely, even if the particle diameter distribution Span is made smaller. Therefore, it is preferred that the particle sizes of the particles are made to be even with each other, and same amounts of the particles are easily moved in a reverse direction, and thus that is this range.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defmed that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

A charge amount of the particle depends upon the measuring condition. However, it is understood that the charge amount of the particle used in the information display panel substantially depends upon an initial charge amount, a contact with respect to the partition wall, a contact with respect to the substrate, a charge decay due to an elapsed time, and specifically a saturation value of the particles for the display media during a charge behavior is a main factor.

After various investigations of the inventors, it is fond that an adequate range of the charged values of the particles for the display media can be estimated by performing a blow-off method utilizing the same carrier particles so as to measure the charge amount of the particles for the display media.

Further, in the dry-type information display panel in which the display media constituted by the particles are driven in a gas space, it is important to control a gas in a gap surrounding the display media between the substrates, and a suitable gas control contributes an improvement of display stability. Specifically, it is important to control a humidity of the gap gas to not more than 60% RH at 25°C, preferably not more than 50% RH.

The above gap means a gas portion surrounding the display media obtained by substituting the electrodes 5, 6 (in the case of arranging electrode inside of substrate), an occupied portion of the display media, an occupied portion of the partition walls 4 and a seal portion of the device from the space between the substrate 1 and the substrate 2 for example in Figs. 1a and 1b.

A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the information display panel so as to maintain the humidity mentioned above. For example, it is important to perform the operations of filling the display media and assembling the substrate under an atmosphere having a predetermined humidity and to apply a seal member and a seal method for preventing a humidity inclusion from outside of the device.

In the information display panel of the charged particles moving type according to the invention, an interval between the substrates is not restricted if the display media can be moved and a contrast can be maintained, and it is adjusted normally to 10 - 100 $\mu$m, preferably 10 - 50 $\mu$m.

Moreover, it is preferred to control a volume occupied rate of the display media in a space between the opposed substrates to 5 - 70 %, more preferably 5 - 60 %. If the volume occupied rate of the display media exceeds 70 %, the display media become difficult to move, and if it is less than 5 %, a sufficient contrast cannot be obtained and a clear image display is not performed.

EXAMPLES

Hereinafter, actual examples will be explained.

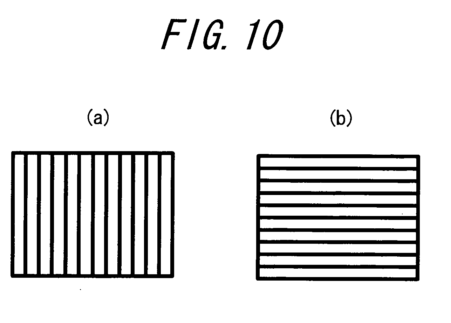

• As shown in Fig. 10a, stripe line electrodes having a pitch of 200$\mu$ m and a length of 30 mm, connection electrodes for a driver, and alignment marks for connection during a production of the information display panel were formed on a film made of polyethylene terephthalate (PET) by means of a photolithograph of indium tin oxide (ITO). In this case, a line electrode interval (space) was set to 20 $\mu$m. ···· (pixel size 1)

• Stripe line electrodes having a pitch of 140 $\mu$m and a length of 30 mm, connection electrodes for a driver, and alignment marks for connection during a production of the information display panel were formed on the PET film by means of a photolithograph of ITO. In this case, a line electrode interval (space) was made to 20 $\mu$m. ···· (pixel size 2)

• A width of the partition wall was set to 20 $\mu$m.

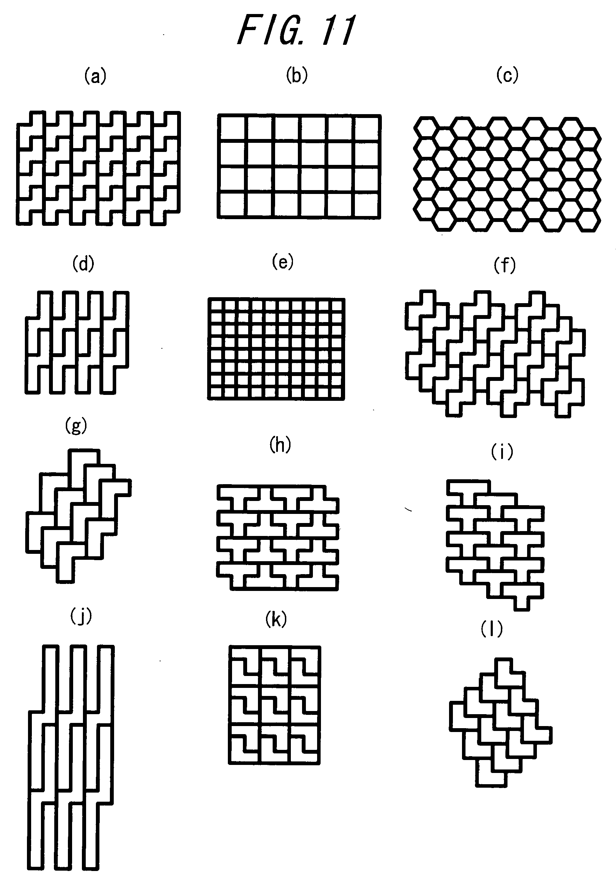

Then, cell constructions as shown in Figs. 11a - 11l were formed on the film on which the ITO electrodes were formed as shown in Fig. 10a, so that the substrate with the partition walls was obtained. In an example A shown in Fig. 11a, an example F shown in Fig. 11f and an example J shown in Fig. 11j, the examples, in which the polygonal cell 12 was the stair-shape, were shown. In an example B shown in Fig. 11b and an example E shown in Fig. 11e, the examples, in which the cell was formed by the grid-shaped partition walls, were shown as the known one, and, in an example C shown in Fig. 11c, the example, in which the cell was formed by the honeycomb-shaped partition walls, was shown as the known one. In an example G shown in Fig. 11g, an example K shown in Fig. 11k and an example L shown in Fig. 11l, the examples, in which the polygonal cell 12 was a L-shape, were shown. In an example H shown in Fig. 11h and an example I shown in Fig. 11i, the examples, in which the polygonal cell 12 was a convex-shape, were shown. In each of the polygonal cells, it was formed by the construction in which the partition walls having six sides or eight sides were connected at a right angle.

Then, black color display media and white color display media were filled in respective cells of the substrate with the partition walls shown in Figs. 11a-11l.

- Black color display media: particles constituted by a positively charged black color particle having an average particle diameter of 0.1 $\mu$m.
- White color display media: particles constituted by a negatively charged white color particle having an average particle diameter of 8.8 $\mu$m.

Moreover, as shown in Fig. 10b, an opposite substrate for laminating with the substrate with the partition walls, in which the display media were filled in the cells, was formed. In the opposite substrate,

- Stripe line electrodes having a pitch of 200 $\mu$m and a length of 30 mm, connection electrodes for a driver, and alignment marks for connection during a production of the information display panel were formed on the PET film. In this case, a line electrode interval (space) was set to 20 $\mu$m. ···· (pixel size 1)
- Stripe line electrodes having a pitch of 150 $\mu$m and a length of 30 mm, connection electrodes for a driver, and alignment marks for connection during a production of the information display panel were formed on the PET film by means of a photolithograph of ITO. In this case, a line electrode interval (space) was made to 20 $\mu$m. ···· (pixel size 2)
- A width of the partition wall was set to 20 $\mu$m.
- A height of the partition wall was set to 50 $\mu$m. Moreover, epoxy adhesive was arranged on a top of the partition wall of the PET film substrate, and the opposite substrate was laminated thereto.

The thus prepared substrate with the partition walls in which the display media were filled in the cells and opposite substrate were laminated, so that the information display panel could be obtained. A pixel size of the thus obtained information display panel was 200 $\mu$m $\times$ 200 $\mu$m (pixel size 1) and 150 $\mu$m $\times$ 150 $\mu$m (pixel size 2). With respect to the respective information display panels having the cell constructions shown in Figs. 11a - 11l, electric lines were connected to the driver, and characters were displayed. During the display, with respect to the respective information display panels, an interference fringe (moire), an expression of line, a strength for the peeling, an existence or nonexistence of display defect generation were investigated, and an estimation was performed by O showing a good one and x showing a no-good one other than an estimation of existence or nonexistence of display defect generation. The results were shown in the following Table 1 and Table 2.

[Table 1]

| Results of pixel size 1 (200 $\mu$m $\times$ 200 $\mu$m) | | | | | | | | | | | | |
|---|---|---|---|---|---|---|---|---|---|---|---|---|
| | Present invention | Known example | Known example | Present invention | Known example | Present invention | Present invention | Present invention | Present invention | Present invention | Present invention | Present invention |
| | A | B | C | D | E | F | G | H | I | J | K | L |
| Fat of characters | ○ | × | ○ | ○ | ○ | ○ | ○ | ○ | ○ | ○ | ○ | ○ |
| Interference fringe (moire) | ○ | ○ | × | ○ | ○ | ○ | ○ | ○ | ○ | ○ | ○ | ○ |
| Expression of line | ○ | ○ | × | ○ | ○ | ○ | ○ | ○ | ○ | ○ | ○ | ○ |
| Strength for peeling | ○ | × | ○ | ○ | ○ | ○ | ○ | ○ | ○ | ○ | ○ | ○× |
| Existence or non-existence of display defect generation | Non existence | Non existence | Non existence | Non existence | Existence | Non existence | Non existence | Non existence | Non existence | Non existence | Non existence | Non existence |

EP 2 315 072 A1

[Table 2]

| Results of pixel size 2 (150 $\mu$m $\times$ 150 $\mu$m) | | | | | | | | | | | | |
|---|---|---|---|---|---|---|---|---|---|---|---|---|
| | Present invention | Known example | Known example | Present invention | Known example | Present invention | Present invention | Present invention | Present invention | Present invention | Present invention | Present invention |
| | A | B | C | D | E | F | G | H | I | J | K | L |
| Fat of characters | ○ | × | ○ | ○ | ○ | ○ | ○ | ○ | ○ | ○ | ○ | ○ |
| Interference fringe (moire) | ○ | × | ○ | ○ | ○ | ○ | ○ | ○ | ○ | ○ | ○ | ○ |
| Expression of line | ○ | ○ | × | ○ | ○ | ○ | ○ | ○ | ○ | ○ | ○ | ○ |
| Strength for peeling | ○ | × | ○ | ○ | ○ | ○ | ○ | ○ | ○ | ○ | ○ | ○× |
| Existence or non-existence of display defect generation | Non existence | Non existence | Non existence | Non existence | Existence | Non existence | Non existence | Non existence | Non existence | Non existence | Non existence | Non existence |

From the results shown in Table 1 and Table 2, it was understood that the information display panels of A, D, F-L according to the examples of the invention were good for all the estimation items, but the information display panels of B, C, E according to the examples of the known one were no-good for some estimation items.

INDUSTRIAL APPLICABILITY

The dot matrix type information display panel according to the invention is preferably applicable to an electric paper used by connecting with the mobile equipment such as notebook personal computers, electric diary, PDAs (Personal Digital Assistants), cellular phones, handy terminals and so on; to the electric paper used as electric books, electric newspaper and so on; to the electric paper used as the bulletin boards such as signboards, posters, blackboards (whiteboards) and so on; to the electric paper for point cards, IC cards, electric advertisements, information boards, electric POPs (Point Of Presence, Point Of Purchase advertising), electric price tags, electric shelf tags, electric musical score, RF-ID device and so on. In addition, the information display panel is preferably applicable to the electric paper for connecting outer terminals of various electric devices such as POS terminals, car navigation system, and so on. Further, the information display panel is preferably applicable to rewritable paper type electric paper which can be rewritten by using outer field generating device.

In the dot matrix type information display panel according to the invention, use may be made of various types of the particles such as particles including conductive particle or particles including semi-conductive particle other than the particles including the charged particle mentioned above. As to the driving method of the electric paper according to the invention, use may be made of various types of driving methods such as: the simple matrix driving method and the static driving method, in which no switching element is used in the panel; the active matrix driving method using the three-terminal switching element such as thin film transistor (TFT) or the two-terminal switching element such as thin film diode (TFD); and the outer field driving method using outer field.

**Claims**

1. A dot matrix type information display panel having a quadrangular dot matrix: in which a plurality of cells each divided by partition walls between two substrates, at least one substrate being transparent; in which display media constituted by particles are sealed in the cell; and in which the display media are electrically driven, by utilizing paired electrodes formed by arranging pixel electrodes having a quadrangular shape to the substrates, so as to display information such as an image, **characterized in that** a plurality of cells are formed by a polygonal cell having even number of sides being at least six sides, and a plurality of cells being constructed by a polygonal shape as a unit are arranged in a display region regularly.

2. The dot matrix type information display panel according to claim 1, wherein all of partition wall portions of the polygonal cells are connected at a right angle.

3. The dot matrix type information display panel according to claim 1 or 2, wherein a shape of the polygonal cell is one of L-shape, stair-shape and convex-shape.

4. The dot matrix type information display panel according to one of claims 1 - 3, wherein a size of the paired electrodes formed by arranging pixel electrodes having a quadrangular shape to the substrates is a quadrangle having 100 $\mu$m over x 100 $\mu$m over.

5. The dot matrix type information display panel according to one of claims 1 - 4, wherein a width of the partition wall is in a range of 5 $\mu$m - 50 $\mu$m.

6. The dot matrix type information display panel according to one of claims 1 - 5, wherein the partition wall is formed by a photolithography method.

# FIG. 1

(a)

3Wa        6      2

}3W

}3B

4        3Ba                5      1

(b)

3Ba        6      2

}3B

}3W

4        3Wa                5      1

EP 2 315 072 A1

# FIG. 2

(a)

(b)

15

# FIG. 3

(a)

22R  6  22G  2  22BL  3Wa

21-1  21-2  21-3

} 3W

} 3B

4  1  5  3Ba

(b)

22R  6  22G  2  22BL  3Ba

21-1  21-2  21-3

} 3B

} 3W

4  5  1  3Wa

(a)

11

(b)

15

FIG. 4

(c)

12

15

11

(d)

12

15

11

(e)

12

15

11

(f)

12

15    11

(g)

12

15    11

EP 2 315 072 A1

(a)    (b)    *FIG. 5*

(c)    (d)    (e)

(f)    (g)

EP 2 315 072 A1

## FIG. 6

(a)

11

(b)

15

(c)

12

15

11

(d)

12

15

11

(e)

12

15

11

(f)

12

15    11

(g)

12

15

11

FIG. 7

(a)

11

(b)

15

(c)

15

11

12

(d)

15

11

12

(e)

12

15

11

(f)

15

12

11

(g)

15

11

12

EP 2 315 072 A1

## FIG. 8

## FIG. 9

# FIG. 10

(a)

(b)

# FIG. 11

(a)

(b)

(c)

(d)

(e)

(f)

(g)

(h)

(i)

(j)

(k)

(l)

# FIG. 12

Line looks fat

Line looks fat

# FIG. 13

Square shape collapses

## FIG. 14

Square shape collapses

Brightness difference (moire)
due to pitch difference

## INTERNATIONAL SEARCH REPORT

| | International application No. |
|---|---|
| | PCT/JP2009/063289 |

**A. CLASSIFICATION OF SUBJECT MATTER**

G02F1/167(2006.01)i, G02F1/17(2006.01)i, G09F9/30(2006.01)i, G09F9/37(2006.01)i

According to International Patent Classification (IPC) or to both national classification and IPC

**B. FIELDS SEARCHED**

Minimum documentation searched (classification system followed by classification symbols)

G02F1/167, G02F1/17, G09F9/30, G09F9/37

Documentation searched other than minimum documentation to the extent that such documents are included in the fields searched

| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2007-164122 A (Bridgestone Corp.),<br>28 June 2007 (28.06.2007),<br>paragraphs [0030], [0038], [0056]; fig. 6, 10, 14<br>(Family: none) | 1,4-6<br>2,3 |
| A | JP 2005-024868 A (Fuji Xerox Co., Ltd.),<br>27 January 2005 (27.01.2005),<br>entire text; all drawings<br>(Family: none) | 1-6 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 October, 2009 (06.10.09) | 20 October, 2009 (20.10.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001215537 A